# FASCICULE DE BREVET EUROPEEN

(11) **EP 2 750 897 B1**
(45) Date de publication et mention de la délivrance du brevet: **20.01.2016**
(21) Numéro de dépôt: 12773121.4
(22) Date de dépôt: 30.08.2012
(51) Int. Cl.: B42D 25/324

(54) **STRUCTURE DE SÉCURITÉ COMPORTANT UNE STRUCTURE OPTIQUE RÉFLÉCHISSANTE, ET PROCÉDÉ ASSOCIÉ**
SICHERHEITSSTRUKTUR MIT EINER REFLEKTIERENDEN OPTISCHEN STRUKTUR UND ZUGEHÖRIGES VERFAHREN
SECURITY STRUCTURE COMPRISING AN REFLECTIVE OPTICAL STRUCTURE, AND ASSOCIATED METHOD

(30) Priorité: 02.09.2011 FR 1157806
(43) Date de publication de la demande: 09.07.2014
(73) Titulaire: Arjowiggins Security, 92100 Boulogne Billancourt (FR)
(72) Inventeur: DOUBLET, Pierre, F-77160 Saint Brice (FR); CAMUS, Michel, F-38140 Rives Sur Fure (FR)
(74) Mandataire: Nony
(86) Numéro de dépôt international: PCT/IB2012/054457
(87) Numéro de publication internationale: WO 2013/030780

(56) Documents cités:
- EP-A2- 1 431 063
- WO-A2-2007/149692
- FR-A1- 2 952 194
- US-A1- 2011 019 283

## Description

La présente invention concerne les structures de sécurité, notamment celles destinées à être introduites dans des documents de sécurité.

Par « document de sécurité », on désigne un moyen de paiement, tel qu'un billet de banque, un chèque ou un ticket restaurant, un document d'identité, tel qu'une carte d'identité, un visa, un passeport ou un permis de conduire, un ticket de loterie, un titre de transport ou encore un ticket d'entrée à des manifestations culturelles ou sportives.

Afin de se prémunir contre des tentatives de falsification ou de contrefaçon d'un document de sécurité, il peut être utile que l'authentification et/ou l'identification d'une structure de sécurité puisse se faire simplement.

Il est connu de réaliser des structures de sécurité avec des réseaux lenticulaires associés à des impressions spécifiques, afin de produire des effets de mouvements, de profondeur et/ou stéréoscopiques. La société SECURENCY en commercialise sous la marque MOTION^{®}.

De telles structures de sécurité exploitent une structure optique dont une face est exposée à l'air, afin que la différence entre les indices de réfraction de l'air et du matériau de la structure produise la réfraction des rayons lumineux recherchée.

Les effets optiques obtenus à l'aide de l'utilisation de réseaux lenticulaires ont notamment été décrits dans l'article "The History of Integral Print Methods" extrait de "Lenz Array Print Techniques" de David E. Roberts et Trebor Smith, l'article "The moiré magnifier" de M C HUTLEY et al., 1994 IOP publishing ltd., et la publication "Academy of the Sciences", de la Session du 2 mars 1908.

On connaît notamment des publications FR 2 952 194, WO 2007/133613, US 2008/0182084, US 2005/0180020 et US 2008/0160226 divers exemples de structures de sécurité comportant des structures optiques.

FR 2 952 194 qui décrit le préambule de la revendication 1, divulgue un substrat portant sur une structure optique et un motif de référence. La structure optique donne une image d'un motif de comparaison. Au moins deux motifs de comparaison peuvent être situés à des distances différentes de la structure optique, en particulier du foyer d'une lentille de la structure optique, de sorte que les images de ces motifs de comparaison apparaissent dans des plans différents. Un motif supplémentaire peut être réalisé par impression pour constituer un fond sur lequel on observe l'image à travers la structure optique des motifs de comparaison. Dans une variante, la structure optique focalise la lumière en des points image et le substrat ne comporte que le motif de référence et la structure optique. La structure optique peut être formée par la métallisation d'un réseau lenticulaire, ce dernier pouvant comporter une lentille de Fresnel. La structure optique peut en outre être recouverte par un vernis qui en annule les effets.

WO 2007/133613 décrit un substrat comportant un réseau lenticulaire et un motif coordonné spatialement avec des images produites par le réseau lenticulaire.

US 2008/0182084 enseigne d'annuler l'effet de lentilles en appliquant un adhésif à leur surface. Dans un exemple, la structure comporte un substrat portant d'un côté le réseau lenticulaire avec des zones revêtues de vernis et de l'autre une structure de diffraction et des micro-images.

US 2005/0180020 divulgue une structure multicouche comportant un réseau lenticulaire pouvant recevoir une impression.

US 2008/0160226 divulgue une structure dans laquelle les images formées à travers un réseau lenticulaire peuvent être observées en superposition à un motif formé par une démétallisation.

Les réseaux lenticulaires ont ainsi été utilisés dans l'art antérieur pour permettre leur superposition à des motifs imprimés de manière à engendrer des effets de mouvement lors de l'observation, notamment par effets de moiré grossissants.

Un des inconvénients des effets de moiré grossissants est la nécessité de pouvoir associer au réseau de lentilles des impressions très fines, ce qui requiert des procédés de fabrication complexes.

Il existe un besoin pour bénéficier de structures de sécurité comportant une structure optique capable de produire de nouveaux effets optiques pouvant contribuer à l'authentification et/ou l'identification d'un objet, notamment de manière simplifiée.

L'invention a ainsi pour objet, selon l'un de ses aspects, une structure de sécurité comportant :
- au moins un motif apparaissant en premier plan,
- au moins une structure optique réfléchissante donnant une image virtuelle de l'observateur, perçue en arrière-plan, en arrière du motif de premier plan.

L'invention peut ainsi permettre l'observation simultanée d'une image formée par un motif en premier plan et d'un fond formé par une image virtuelle de l'observateur en arrière-plan. La structure optique réfléchissante, qui comporte notamment un réseau de lentilles réfléchissantes, peut donner une image virtuelle de l'observateur de taille réduite dans le cas préférentiel de convexité des lentilles ou de taille agrandie dans le cas de concavité des lentilles.

Le réseau de lentilles réfléchissantes peut avantageusement comporter un réseau de lentilles de Fresnel et une couche réfléchissante.

Grâce l'invention, un effet de fond en trois dimensions (3D) peut être obtenu par l'intermédiaire du motif apparaissant en premier plan et de la structure optique réfléchissante donnant une image virtuelle de l'observateur, perçue en arrière-plan, ce qui requiert des procédés de fabrication simplifiés par rapport à ceux mis en oeuvre dans l'art antérieur.

La structure peut comporter un substrat entre le motif de premier plan et la structure optique réfléchissante.

Le substrat peut être au moins partiellement transparent ou translucide. Le substrat peut par exemple être ou comporter un film d'un matériau thermoplastique transparent ou translucide, par exemple du polyester ou PET.

La structure optique réfléchissante peut recouvrir totalement la face du substrat portant la structure optique, ou en variante ne la recouvrir que partiellement.

La structure optique réfléchissante peut être équivalente à un miroir convexe, notamment à un miroir sphérique convexe. En particulier, la structure optique réfléchissante peut comporter un réseau de lentilles de Fresnel et une couche réfléchissante.

La couche réfléchissante peut être située de sorte à être entre le motif de premier plan et le réseau de lentilles de Fresnel ou de sorte que le réseau de lentilles de Fresnel soit entre le motif de premier plan et la couche réfléchissante. La couche réfléchissante peut être une couche métallisée, par exemple en aluminium, recouvrant notamment les lentilles de Fresnel. La couche métallisée peut avoir une épaisseur comprise entre 0,1 et 0,3 µm. La couche métallisée peut être appliquée sur les lentilles de Fresnel par vaporisation, de sorte que la couche métallisée épouse la forme du relief des lentilles pour former la structure optique réfléchissante sans annuler l'effet lenticulaire.

La couche métallisée peut être recouverte d'un vernis de lissage, notamment destiné à permettre l'application, de préférence l'impression, du motif de premier plan. De plus, le vernis de lissage peut permettre de protéger le réseau de lentilles de Fresnel métallisées.

En variante, la couche réfléchissante peut être une composition réfléchissante, recouvrant notamment les lentilles de Fresnel du côté de leur face concave.

La couche réfléchissante peut être associée à une ou plusieurs autres couches de sécurité, notamment une couche magnétique, fluorescente et/ou phosphorescente.

La structure optique peut être réalisée par embossage, notamment par thermo-embossage ou par embossage suivi d'une réticulation aux ultraviolets. En particulier, le réseau de lentilles de Fresnel peut être formé par embossage en creux ou en relief d'un vernis (ou résine). Le vernis peut par exemple comporter une résine époxy, acrylique, du PET ou du polyester, entre autres.

Le réseau de lentilles de Fresnel peut par exemple être embossé en relief dans le vernis et recouvert d'une couche métallisée sur la face convexe des lentilles.

En variante, le réseau de lentilles de Fresnel peut être embossé en creux dans le vernis et une composition réfléchissante peut être appliquée dans le creux des lentilles du côté de la face concave.

La structure optique peut ou non s'étendre d'un bord à l'autre du substrat selon la longueur et/ou la largeur du substrat.

Le substrat peut présenter une ou plusieurs zones dépourvues de la structure optique et une ou plusieurs zones recouvertes par la structure optique.

La structure optique peut être discontinue. En particulier, la structure optique peut être constituée d'un ensemble de sous-structures optiques disjointes, identiques ou non. Ces sous-structures optiques peuvent comporter des structures optiques élémentaires, par exemple des réseaux de lentilles, ces structures optiques élémentaires pouvant être ou non disjointes et être ou non identiques. Ces sous-structures optiques peuvent notamment correspondre à des réseaux de lentilles de Fresnel permettant d'observer en arrière-plan la réflexion de l'observateur.

La structure optique peut avoir une forme allongée selon un axe longitudinal.

La structure optique peut avoir une forme géométrique quelconque, par exemple de contour polygonal ou non, par exemple carré, rectangle, losange, triangle, trapèze, parallélogramme, circulaire, elliptique, entre autres.

Les structures optiques élémentaires constituant la structure optique peuvent avoir ou non toutes la même forme géométrique. Les structures optiques élémentaires peuvent par exemple être toutes sous la forme de parallélogrammes. Les structures optiques élémentaires, identiques ou non, peuvent être disposées sur la structure de sécurité à intervalles réguliers ou non.

La structure optique peut comporter un réseau de lentilles, notamment un réseau de lentilles de Fresnel, d'une épaisseur par exemple comprise entre 2 et 30µm, par exemple égale à 6µm, et un diamètre des lentilles par exemple compris entre 1 et 20 mm, par exemple égal à 10 mm.

Le motif de premier plan peut être formé par impression, par exemple une macro-impression ou une impression holographique, par métallisation ou démétallisation. Le motif de premier plan peut être métallique. Un motif métallique disposé sur une couche réfléchissante métallique est particulièrement attrayant et constitue donc une sécurité immédiatement reconnaissable.

Le motif peut correspondre par exemple à un caractère alphanumérique, signe, logo, symbole, personnage ou objet.

Le motif peut être porté sur le substrat par exemple par un procédé d'impression du type offset, taille douce, laser, jet d'encre, micro-lithographie, héliogravure ou par sérigraphie.

Le motif peut être imprimé avec des encres colorées ou non, visibles à l'oeil nu, sous lumière ultraviolette (UV) et/ou infrarouge (IR), opaques, fluorescentes, phosphorescentes, thermochromiques, photochromiques, translucides et/ou transparentes, entre autres.

Le motif est de préférence situé au moins partiellement en recouvrement du réseau de lentilles, notamment de Fresnel.

De préférence, au moins 75 % de la surface du motif recouvre le réseau de lentilles.

Un même motif peut être superposé à plusieurs lentilles.

Le motif est plus proche de l'observateur que ne l'est la structure optique réfléchissante, celle-ci donnant une image virtuelle de l'observateur, perçue en arrière-plan, en arrière du motif. Le plan focal de la structure optique réfléchissante peut être situé entre la surface réfléchissante et le motif de premier plan, ou derrière la surface réfléchissante.

La structure de sécurité peut en outre être revêtue sur ses faces externes d'un vernis thermoscellable, notamment pour permettre de faciliter l'adhésion de la structure dans un document de sécurité l'incorporant, notamment un papier de sécurité. Le vernis thermoscellable peut permettre d'uniformiser la surface des faces externes de la structure de sécurité. Par exemple, le vernis thermoscellable peut permettre d'uniformiser la surface d'une composition réfléchissante, par exemple une encre à base de fines particules, déposée sur les lentilles de Fresnel embossées en creux dans un vernis. Le vernis thermoscellable peut constituer en outre une couche protectrice. Avantageusement, la présence d'un vernis thermoscellable n'annule pas les effets optiques de la structure optique réfléchissante. Le vernis thermoscellable peut recouvrir partiellement ou totalement la surface des faces externes de la structure de sécurité.

Le réseau de lentilles de Fresnel peut s'étendre sur une partie seulement de la structure, notamment délimitant une zone sans lentilles s'étendant à partir d'un bord au moins de la structure, la couche réfléchissante s'étendant partiellement dans cette zone.

La structure de sécurité peut comporter un motif situé en partie en recouvrement du réseau de lentilles et en partie en recouvrement de ladite zone dépourvue de lentilles.

La structure de sécurité peut constituer un fil de sécurité, un film de sécurité ou un patch. De préférence, la structure de sécurité est un fil de sécurité. La structure de sécurité peut avoir une largeur par exemple supérieure ou égale à 4 mm, mieux 5 mm, mieux encore 6 mm, par exemple comprise entre 6 et 8 mm, mieux entre 6 et 10 mm.

La structure optique peut être formée sur le substrat, dans le même matériau ou non, en étant rapportée ou non.

L'épaisseur du substrat est par exemple comprise entre 5 et 100 µm, de préférence 20 et 30 µm. Le substrat peut présenter une épaisseur constante. L'épaisseur du substrat peut éventuellement être choisie en fonction de la structure optique, par exemple en fonction de la distance focale de cette structure optique, de façon à avoir l'effet optique recherché.

L'invention a encore pour objet, selon un autre de ses aspects, un document, notamment un document de sécurité, incorporant une structure de sécurité telle que définie précédemment.

La structure de sécurité peut ou non s'étendre d'un bord à l'autre du document.

La structure de sécurité peut être ou non incorporé en fenêtre(s) dans le document.

La structure de sécurité incorporée dans le document peut être visible totalement ou partiellement selon une seule de ses faces ou selon ses deux faces.

Le document, ou la structure de sécurité qu'il comporte, peuvent comporter un ou plusieurs éléments de sécurité supplémentaires tels que définis ci-après.

Parmi les éléments de sécurité supplémentaires, certains sont détectables à l'oeil, en lumière du jour ou en lumière artificielle, sans utilisation d'un appareil particulier. Ces éléments de sécurité comportent par exemple des fibres ou planchettes colorées, des fils imprimés ou métallisés totalement ou partiellement. Ces éléments de sécurité sont dits de premier niveau.

D'autres types d'éléments de sécurité supplémentaires sont détectables seulement à l'aide d'un appareil relativement simple, tel qu'une lampe émettant dans l'ultraviolet (UV) ou l'infrarouge (IR). Ces éléments de sécurité comportent par exemple des fibres, des planchettes, des bandes, des fils ou des particules. Ces éléments de sécurité peuvent être visibles à l'oeil nu ou non, étant par exemple luminescents sous un éclairage d'une lampe de Wood émettant dans une longueur d'onde de 365 nm. Ces éléments de sécurité sont dits de deuxième niveau.

D'autres types d'éléments de sécurité supplémentaires nécessitent pour leur détection un appareil de détection plus sophistiqué. Ces éléments de sécurité sont par exemple capables de générer un signal spécifique lorsqu'ils sont soumis, de manière simultanée ou non, à une ou plusieurs sources d'excitation extérieure. La détection automatique du signal permet d'authentifier, le cas échéant, le document. Ces éléments de sécurité comportent par exemple des traceurs se présentant sous la forme de matières actives, de particules ou de fibres, capables de générer un signal spécifique lorsque ces traceurs sont soumis à une excitation optronique, électrique, magnétique ou électromagnétique. Ces éléments de sécurité sont dits de troisième niveau.

Le ou les éléments de sécurité supplémentaires présents au sein du document, ou de la structure de sécurité qu'il comporte, peuvent présenter des caractéristiques de sécurité de premier, de deuxième ou de troisième niveau.

L'invention a encore pour objet, selon un autre de ses aspects, un procédé d'authentification d'un document tel que défini ci-dessus, dans lequel on génère une information concernant l'authenticité du document au moins à partir d'une observation de celui-ci.

L'invention pourra être mieux comprise à la lecture de la description détaillée qui va suivre, d'exemples de mise en oeuvre non limitatifs de celle-ci, ainsi qu'à l'examen du dessin annexé, sur lequel :
- la figure la représente, en coupe, un exemple de structure de sécurité conforme à l'invention,
- la figure 1b représente, en coupe, un autre exemple de structure de sécurité conforme à l'invention,
- la figure 2 est une vue du dessus de la structure de la figure 1a ou de la figure 1b,
- la figure 3a représente schématiquement un exemple de lentille de Fresnel et la figure 3b représente schématiquement un exemple de lentille convexe,
- la figure 4 illustre le principe d'observation d'un objet au travers d'une lentille de Fresnel,
- la figure 5 représente un document de sécurité comportant une structure de sécurité conforme à l'invention, et
- la figure 6 représente une variante de réalisation d'une structure de sécurité conforme à l'invention.

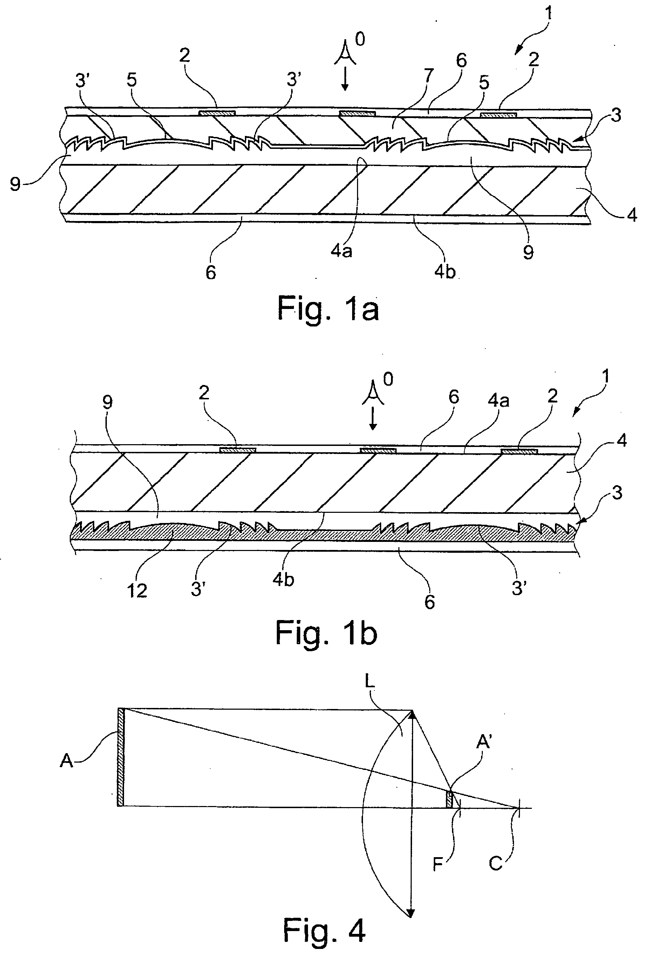

On a représenté sur la figure 1a un exemple de structure de sécurité 1 conforme à un exemple de réalisation de l'invention.

La structure de sécurité 1 se présente par exemple sous la forme d'un fil de sécurité d'une largeur comprise entre 4 et 10 mm, de préférence entre 4 et 8 mm.

La structure de sécurité 1 comporte un substrat 4, par exemple en polyéthylène téréphtalate (PET). Du côté d'une face 4a du substrat 4, opposée la face 4b, sont formés une structure optique réfléchissante 3 et des motifs 2 apparaissant en premier plan pour un observateur O.

La structure optique réfléchissante 3 comporte un réseau de lentilles de Fresnel 3'et une couche réfléchissante 5.

Le réseau de lentilles de Fresnel 3' est par exemple formé par embossage en relief (dans le sens de l'observation) d'un vernis 9, par exemple une résine époxy, acrylique, du PET ou du polyester. Le réseau de lentilles de Fresnel 3' embossé dans le vernis 9 peut présenter une épaisseur comprise entre 1 et 10 µm.

La couche réfléchissante 5 est située entre les motifs 2 de premier plan et le réseau de lentilles de Fresnel 3'.

La couche réfléchissante 5 est une couche métallisée, par exemple en aluminium, recouvrant le réseau de lentilles de Fresnel 3'.

La couche métallisée 5 peut avoir une épaisseur comprise entre 0,1 et 0,3 µm. Elle peut être appliquée sur les lentilles de Fresnel par vaporisation ou dépôt sous vide de sorte à épouser la forme du relief des lentilles pour former la structure optique réfléchissante 3 sans annuler l'effet lenticulaire.

La couche métallisée 5 est en outre, dans cet exemple, recouverte d'un vernis de lissage 7 destiné à faciliter l'application des motifs 2 de premier plan. De plus, le vernis de lissage 7 peut permettre de protéger le réseau de lentilles de Fresnel métallisées 3'. En variante, les motifs 2 de premier plan peuvent être appliqués directement, notamment par impression, sur la couche métallisée 5 sans présence d'un vernis de lissage 7.

En variante encore, les motifs 2 de premier plan peuvent être appliqués, notamment par impression, sur un support distinct, notamment un support en PET mince, qui est contrecollé sur la structure optique réfléchissante 3, le vernis de lissage 7 étant alors remplacé par une couche adhésive.

En variante, le réseau de lentilles de Fresnel 3' est embossé directement dans le substrat 4.

Les motifs 2 peuvent être réalisés par exemple par impression, notamment par macro-impression ou impression holographique, métallisation ou démétallisation.

En outre, un vernis thermoscellable 6 recouvre les deux faces externes de la structure de sécurité 1 pour permettre la tenue de la structure de sécurité 1 dans le document de sécurité 10.

La figure 1b représente une variante de réalisation d'une structure de sécurité 1 selon l'invention.

Dans cet exemple, la couche réfléchissante 5 est située de sorte que le réseau de lentilles de Fresnel 3' est entre les motifs 2 de premier plan et la couche réfléchissante 5.

Le réseau de lentilles de Fresnel 3' est embossé en creux (dans le sens opposé à l'observation) dans le vernis 9 et une composition réfléchissante 12 est appliquée dans le creux des lentilles du côté de leur face concave. La composition réfléchissante 12 peut comporter une encre à base de fines particules, par exemple des nanoparticules, notamment de métal, qui permettent de donner un effet réfléchissant lors de l'observation en O.

Le procédé d'embossage en creux peut être préféré en ce qu'il est plus simple que le procédé d'embossage en relief et en ce qu'il ne nécessite pas la mise en place d'un vernis de lissage 7.

En variante, une couche réfléchissante 5 métallisée est déposée, notamment par vaporisation, sur le réseau de lentilles de Fresnel 3' du côté de leur face concave (dans le creux) et un vernis de lissage 7 est éventuellement appliqué de sorte à recouvrir la structure optique réfléchissante 3 pour l'aplanir et la protéger.

La couche réfléchissante 5 peut être associée à une ou plusieurs autres couches de sécurité, notamment une couche magnétique, fluorescente et/ou phosphorescente.

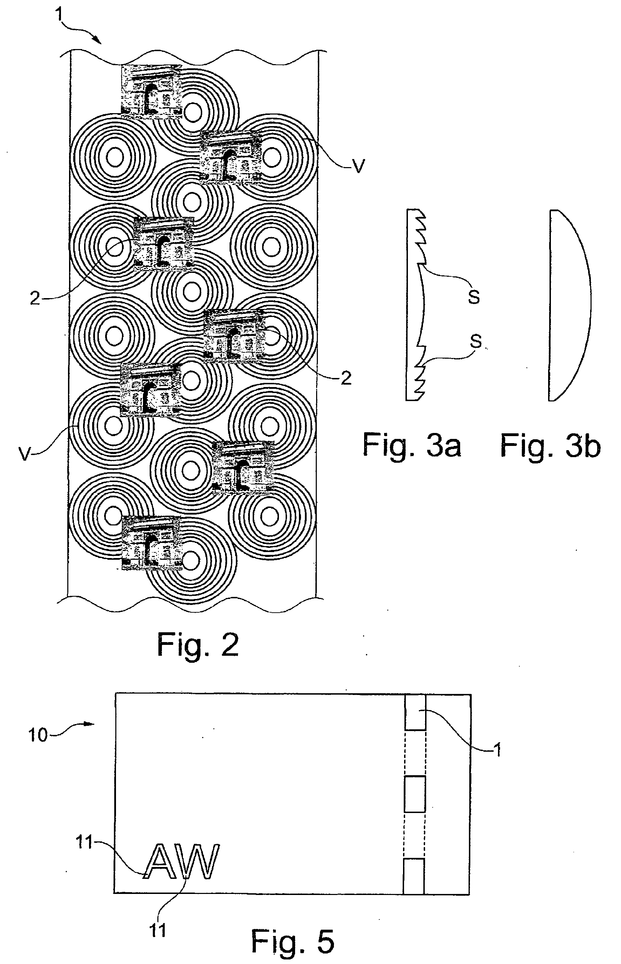

La figure 2 représente une vue du dessus de la figure 1a ou de la figure 1b, illustrant ce que l'observateur O peut voir lorsqu'il regarde la structure de sécurité 1 du côté de la face 4a du substrat 4.

La structure optique réfléchissante 3 est apte à donner une image virtuelle V de l'observateur O qui regarde la structure de sécurité 1 du côté de la face 4a du substrat 4. Cette image virtuelle V est perçue en arrière-plan pour l'observateur O, en arrière des motifs 2 de premier plan. Cela permet alors d'obtenir un effet en trois dimensions (3D) lors de l'observation.

Les figures 3a et 3b représentent respectivement un exemple de lentille de Fresnel et un exemple de lentille convexe ayant des distances focales équivalentes.

Une lentille de Fresnel, comme illustré sur la figure 3a, peut être obtenue à partir d'une lentille convexe, comme illustré sur la figure 3b, par subdivision en tranches équidistantes dans le plan de la lentille et suppression des portions de tranches qui présentent une épaisseur constante pour obtenir une plaque mince.

La lentille de Fresnel comporte ainsi des stries S qui se resserrent entre elles en éloignement du centre de la lentille. La hauteur des stries S est par exemple de l'ordre de 1 µm près du centre de la lentille et de l'ordre de 11 µm en bordure de la lentille.

On a représenté sur la figure 4 le principe de l'observation d'un objet A vu à l'aide d'un miroir convexe formée par une lentille de Fresnel L métallisée, donc réfléchissante. Sur la figure 4, C représente le centre de courbure de la lentille et F le foyer de la lentille. Avantageusement, on comprend qu'un miroir convexe obtenu au moyen d'une lentille de Fresnel réfléchissante permet de réaliser une structure de sécurité 1 plate et de faible épaisseur parfaitement adaptée aux documents de sécurité tels qu'un billet de banque dont l'épaisseur est d'environ 100 µm. En effet, une lentille conventionnelle de 5 à 10 mm à rayon de courbure équivalent aurait une épaisseur de 200 à 300 µm, ce qui est non souhaitable pour une application dans les documents de sécurité.

L'image A' de l'objet A apparaît de taille réduite lorsqu'observée à l'aide de la lentille de Fresnel L formant le miroir convexe. Par ailleurs, plus l'objet A est éloigné de la lentille de Fresnel L formant le miroir convexe, plus l'image observée A' est de taille réduite. En outre, plus la courbure de Fresnel L formant le miroir convexe est importante, plus l'image A' apparaît de taille réduite.

La figure 5 représente un exemple de document de sécurité 10 incorporant une structure de sécurité 1 selon l'invention, par exemple telle que décrite aux figures 1a et 1b.

La structure de sécurité 1 est par exemple introduite en fenêtre(s) dans le document de sécurité 10. En variante, la structure de sécurité 1 peut être incorporée en masse dans le document de sécurité 10, totalement ou partiellement.

De plus, le document de sécurité 10 peut comporter d'autres éléments de sécurité 11, par exemple tels que décrits précédemment.

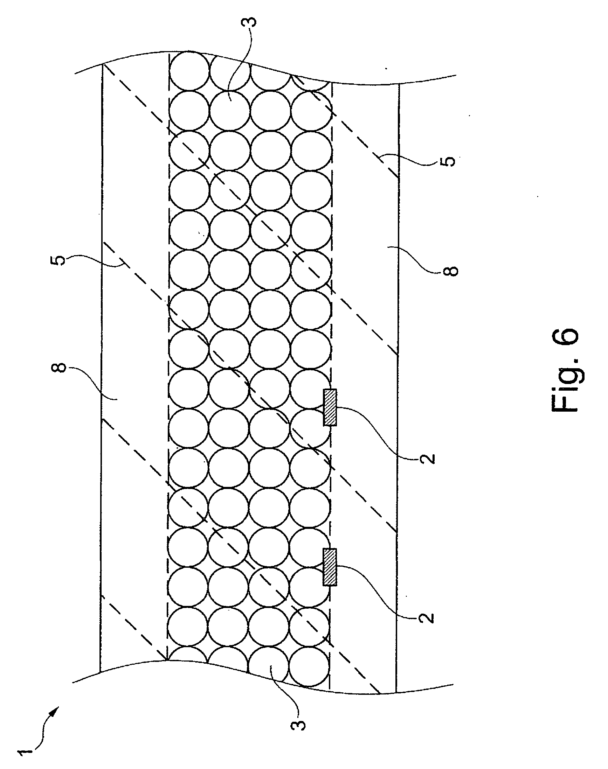

On a représenté sur la figure 6 une variante de réalisation de la structure de sécurité 1 de la figure 1a. La structure 1 est représentée telle qu'observée depuis la face 4a du substrat 4, la structure optique réfléchissante 3 et la couche réfléchissante 5 étant représentées en pointillés et les motifs 2 en traits pleins. La structure de sécurité 1 peut ou non être revêtue sur une ou deux de ses faces par un vernis thermoscellable 6 (non représenté).

Dans cet exemple, la structure optique réfléchissante 3 comporte un réseau de lentilles de Fresnel ne s'étendant que sur une partie seulement de la structure 1, en délimitant deux zones 8 en bordure de la structure 1 dépourvues de lentilles. La couche réfléchissante 5 métallisée s'étend par exemple entièrement sur la structure de sécurité 1.

Lorsque l'observateur O observe la structure 1 depuis la face 4a du substrat 4, il peut ainsi observer à la fois une image virtuelle V de lui-même formée par le réseau de lentilles de Fresnel métallisées, formant un miroir convexe, de taille réduite, et une image de lui-même réfléchie par les zones 8 dépourvues de lentilles mais sur lesquelles figure la couche réfléchissante 5, zones équivalentes à un miroir plan. Une comparaison peut ainsi être faite entre l'image virtuelle V renvoyée par le réseau de lentilles formant les miroirs convexes et l'image réfléchie par les zones 8 dépourvues de lentilles.

Les motifs 2 de premier plan peuvent être situés en partie en recouvrement du réseau de lentilles et en partie en recouvrement des zones 8 dépourvues de lentilles formant les miroirs convexes.

L'expression « comportant un » doit être comprise comme étant synonyme de « comportant au moins un », sauf si le contraire est spécifié.

## Revendications

1. Structure de sécurité (1) comportant :
- au moins un motif (2) apparaissant en premier plan, **caractérisée en ce qu'**elle comporte
- au moins une structure optique réfléchissante (3) donnant une image virtuelle (V) de l'observateur (O), perçue en arrière-plan, en arrière du motif (2) de premier plan.

2. Structure selon la revendication 1, la structure optique réfléchissante (3) comportant un réseau de lentilles réfléchissantes.

3. Structure selon la revendication 1 ou 2, comportant un substrat (4) entre le motif (2) de premier plan et la structure optique réfléchissante (3).

4. Structure selon l'une des revendications précédentes, la structure optique réfléchissante (3) étant équivalente à un miroir convexe, notamment un miroir sphérique convexe.

5. Structure selon l'une des revendications précédentes, la structure optique réfléchissante (3) comportant un réseau de lentilles de Fresnel (3') et une couche réfléchissante (5).

6. Structure selon la revendication 5, le réseau de lentilles de Fresnel (3') étant embossé dans un vernis (9).

7. Structure selon la revendication 5 ou 6, la couche réfléchissante (5) étant une couche métallisée et le réseau de lentilles de Fresnel (3') étant embossé en relief dans le vernis (9), la couche métallisée étant appliquée sur le relief.

8. Structure selon la revendication 7, la couche métallisée étant recouverte d'un vernis de lissage (7), destiné notamment à permettre l'application du motif (2) de premier plan.

9. Structure selon la revendication 5 ou 6, la couche réfléchissante (5) étant une composition réfléchissante et le réseau de lentilles de Fresnel (3') étant embossé en creux dans le vernis (9), la composition réfléchissante étant appliquée dans le creux.

10. Structure selon l'une quelconque des revendications précédentes, le motif (2) de premier plan étant formé par impression, par métallisation ou démétallisation.

11. Structure selon l'une quelconque des revendications précédentes, étant revêtue sur ses faces externes d'un vernis thermoscellable (6), la structure constituant notamment un fil de sécurité ou un patch.

12. Structure selon l'une des revendications 5 à 11, le réseau de lentilles de Fresnel (3') s'étendant sur une partie seulement de la structure (1), notamment délimitant une zone (8) sans lentilles s'étendant à partir d'un bord au moins de la structure, la couche réfléchissante (5) s'étendant au moins partiellement dans cette zone (8).

13. Structure selon la revendication 12, comportant un motif (2) situé en partie en recouvrement du réseau de lentilles et en partie en recouvrement de ladite zone (8) dépourvue de lentilles.

14. Document (10) incorporant une structure de sécurité (1) selon l'une quelconque des revendications précédentes.

15. Procédé d'authentification d'un document (10) selon la revendication 14, dans lequel on génère une information concernant l'authenticité du document (10) au moins à partir d'une observation de celui-ci.

## Patentansprüche

1. Sicherheitsstruktur (1) mit
wenigstens einem Muster (2), das im Vordergrund erscheint, **gekennzeichnet durch** wenigstens eine optisch reflektierende Struktur (3), die dem Beobachter (O) ein virtuelles Bild (V) im Hintergrund hinter dem Muster im Vordergrund erscheinen lässt.

2. Struktur nach Anspruch 1, wobei die optisch reflektierende Struktur (3) ein Gitter aus reflektierenden Linsen aufweist.

3. Struktur nach Anspruch 1 oder 2, mit einem Substrat (4) zwischen dem Muster (2) im Vordergrund und der optisch reflektierenden Struktur (3).

4. Struktur nach einem der vorstehenden Ansprüche, wobei die optisch reflektierende Struktur (3) äquivalent zu einem Konvexspiegel ist, insbesondere einem sphärischen Konvexspiegel.

5. Struktur nach einem der vorstehenden Ansprüche, wobei die optisch reflektierende Struktur (3) ein Gitter aus Fresnel-Linsen (3') und eine reflektierende Schicht (5) aufweist.

6. Struktur nach Anspruch 5, wobei das Gitter aus Fresnel-Linsen (3') in einen Lack (9) geprägt ist.

7. Struktur nach Anspruch 5 oder 6, wobei die reflektierende Schicht (5) eine Metallisierungsschicht ist und das Gitter aus Fresnel-Linsen (3') als Hochdruck in den Lack (9) geprägt ist, wobei die Metallisierungsschicht auf den Hochdruck aufgebracht ist.

8. Struktur nach Anspruch 7, wobei die Metallisierungsschicht mit einem Glättungslack (7) überzogen ist, der insbesondere dazu geeignet ist, die Aufbringung des Musters (2) im Vordergrund zu erlauben.

9. Struktur nach Anspruch 5 oder 6, wobei die reflektierende Schicht (5) eine reflektierende Zusammensetzung ist und das Gitter aus Fresnel-Linsen (3') als Tiefdruck in dem Lack (9) geprägt ist, wobei die reflektierende Zusammensetzung in den Tiefdruck aufgebracht ist.

10. Struktur nach einem der vorstehenden Ansprüche, wobei das Muster (2) im Vordergrund als Druck durch Metallisierung oder Entmetallisierung aufgebracht ist.

11. Struktur nach einem der vorstehenden Ansprüche, die auf ihren Außenseiten mit einem wärmeversiegelnden Lack (6) beschichtet ist, wobei die Struktur insbesondere einen Sicherheitsstreifen oder einen Aufkleber darstellt.

12. Struktur nach einem der vorstehenden Ansprüche 5 bis 11, wobei das Gitter aus Fresnel-Linsen (3') sich nur über einen Teil der Struktur (1) erstreckt und insbesondere eine Zone (8) ohne Linsen abgrenzt, die sich von wenigstens einem Rand der Struktur erstreckt, wobei die reflektierende Schicht (5) wenigstens teilweise in dieser Zone (8) verläuft.

13. Struktur nach Anspruch 12, mit einem Muster (2), das zum Teil in Überlappung mit dem Gitter aus Linsen und zum Teil in Überlappung mit der linsenfreien Zone (8) liegt.

14. Dokument (10), das eine Sicherheitsstruktur (1) nach einem der vorstehenden Ansprüche enthält.

15. Verfahren zur Authentifizierung eines Dokuments (10) nach Anspruch 14, in dem wenigstens eine Information über die Authentizität des Dokuments (10) erzeugt wird, die auf einer Beobachtung desselben basiert.

## Claims

1. A security structure (1) comprising:
- at least one pattern (2) appearing in the foreground; **characterized in that** it comprises
- at least one reflective optical structure (3) creating a virtual image (V) of the observer (O), which image is seen in the background behind the foreground pattern (2).

2. The structure as claimed in claim 1, the reflective optical structure (3) comprising an array of reflective lenses.

3. The structure as claimed in claim 1 or 2, comprising a substrate (4) between the foreground pattern (2) and the reflective optical structure (3).

4. The structure as claimed in one of the preceding claims, the reflective optical structure (3) being equivalent to a convex mirror, especially a spherical convex mirror.

5. The structure as claimed in one of the preceding claims, the reflective optical structure (3) comprising an array of Fresnel lenses (3') and a reflective layer (5).

6. The structure as claimed in claim 5, the array of Fresnel lenses (3') being imprinted in a lacquer (9).

7. The structure as claimed in claim 5 or 6, the reflective layer (5) being a metal layer and the array of Fresnel lenses (3') being embossed in the lacquer (9), the metal layer being applied to the embosses.

8. The structure as claimed in claim 7, the metal layer being covered with a smoothing lacquer (7) especially intended to allow the foreground pattern (2) to be applied.

9. The structure as claimed in claim 5 or 6, the reflective layer (5) being a reflective composition, and the array of Fresnel lenses (3') being debossed in the lacquer (9), the reflective composition being applied to the debosses.

10. The structure as claimed in any one of the preceding claims, the foreground pattern (2) being formed by printing, by metallization or demetallization.

11. The structure as claimed in any one of the preceding claims, being coated, on its external faces, with a heat-sealing lacquer (6), the structure constituting possibly a security thread or a patch.

12. The structure as claimed in one of claims 5 to 11, the array of Fresnel lenses (3') extending over only part of the structure (1), especially bounding a lens-free zone (8) extending from at least one edge of the structure, the reflective layer (5) at least partially extending into this zone (8).

13. The structure as claimed in claim 12, comprising a pattern (2) arranged partially covering the array of lenses and partially covering said lens-free zone (8).

14. A document (10) incorporating a security structure (1) as claimed in any one of the preceding claims.

15. A method for authenticating a document (10) as claimed in claim 14, in which information relating to the authenticity of the document (10) is generated at least by observing the latter.
